Europäisches Patentamt

European Patent Office

Office européen des brevets

(19)

(11) Veröffentlichungsnummer: **0 332 902 B1**

(12)

# EUROPÄISCHE PATENTSCHRIFT

(45) Veröffentlichungstag der Patentschrift: **25.11.92**

(51) Int. Cl.5: **F16F 13/00**

(21) Anmeldenummer: **89103318.5**

(22) Anmeldetag: **24.02.89**

(54) **Hydraulisch dämpfendes Zweikammer-Motorlager.**

(30) Priorität: **18.03.88 DE 3809166**

(43) Veröffentlichungstag der Anmeldung:
**20.09.89 Patentblatt 89/38**

(45) Bekanntmachung des Hinweises auf die
Patenterteilung:
**25.11.92 Patentblatt 92/48**

(84) Benannte Vertragsstaaten:
**DE ES FR GB IT SE**

(56) Entgegenhaltungen:
**EP-A- 0 163 817**
**EP-A- 0 265 681**
**DE-C- 3 407 553**
**GB-A- 2 158 182**
**GB-A- 2 206 668**

(73) Patentinhaber: **METZELER GIMETALL AG**
**Gneisenaustrasse 15**
**W-8000 München 50(DE)**

(72) Erfinder: **Hofmann, Manfred**
**Gerhard von Dietz-Strasse 15**
**W-6257 Hünfelden(DE)**
Erfinder: **Müller, Hans**
**Ringstrasse 24**
**W-5410 Höhr-Grenzhausen(DE)**

(74) Vertreter: **Michelis, Theodor, Dipl.-Ing. et al**
**Seibert + Michelis Rechtsanwälte und Pa-**
**tentanwälte Tattenbachstrasse 9**
**W-8000 München 22(DE)**

## Beschreibung

Die Erfindung bezieht sich auf ein hydraulisch dämpfendes Zweikammer-Motorlager mit einer Arbeitskammer und einer Ausgleichskammer, wobei die Arbeitskammer auf einer Seite von einer elastischen, starkwandigen und kegelförmigen Kammerwandung und einer Motorlagerplatte und die Ausgleichskammer von einer tassenförmigen Gummiwandung sowie einem als Gehäusedeckel ausgebildeten Widerlager umgeben sind und beide, mit Flüssigkeit gefüllte Kammern über einen, in einer Zwischenplatte zwischen den Kammern angeordneten Überströmkanal hydraulisch miteinander in Verbindung stehen, und wobei in der zentral offenen, quer zur Lagerlängsachse in zwei symmetrische Hälften geteilten Zwischenplatte eine elastische Gummimembran eingespannt ist, die einen außen umlaufenden, über einen Steg geringer Dicke mit dem sich stetig verdickenden Membranmittelteil verbundenen, zylindrischen Randbereich aufweist, wobei die den sich verdickenden Membranmittelbereich überdeckenden innenliegende Randbereiche der Zwischenplattenhälften auf ihrer Unterseite einen zur Membrankontur angenähert parallelen Verlauf aufweisen und zur Membranoberfläche einen Freiweg vorgegebener Größe begrenzen.

Ein derartiges Lager ist beispielsweise aus der EP-A-0 163 817 oder GB-A-2 158 182 bekannt.

Bei solch einem bekannten hydraulisch gedämpften Zweikammer-Motorlager ist ebenfalls in einer horizontal geteilten Zwischenplatte eine Membran mit verdicktem Mittelbereich eingespannt, wobei die Bewegung der Membran durch entsprechende Anschlagflächen der Zwischenplatte begrenzt wird. Auch hierbei ist jedoch lediglich eine Beeinflußung und Entkopplung hochfrequenter Schwingungen möglich.

Dabei soll mit der Anordnung und Gestaltung der Membran das akustische Verhalten des Lagers verbessert werden, d.h. die Membran soll Schwingungen kleiner Amplitude und hoher Frequenz entkoppeln. Durch eine besondere Gestaltung der Zwischenplatte soll die Auslenkung der Membran parziell so begrenzt werden, daß lästige Klopfgeräusche vermieden werden.

Der vorliegenden Erfindung liegt demgegenüber die Aufgabe zugrunde, ein hydraulisch dämpfendes Zweikammer-Motorlager zu schaffen, bei dem allein durch Gestaltung und Anordnung der Membran sowohl die Dämpfung niedriger Frequenzen großer Amplitude, als auch die Entkopplung höherer Frequenzen niedriger Amplitude beeinflußt werden kann, um damit eine optimale Abstimmung und Anpassung an die geforderten Verhältnisse mit geringem Aufwand zu ermöglichen.

Zur Lösung dieser Aufgabe ist erfindungsgemäß vorgesehen, daß der zylindrische Randbereich der Membran bis in den in die Zwischenplattenhälften eingelassenen Überströmkanal ragt und mit seinem Außenumfang die radial innenliege Begrenzung des Kanals bildet.

Durch eine derartige Ausbildung und Anordnung der Membran kann einmal durch Variation des Außendurchmessers der Membran der Querschnitt des Überströmkanals, der für die Dämpfung von Schwingungen großer Amplitude maßgebend ist, eingestellt werden, während durch Veränderung der Dicke der Membran und ihrer Kontur die Entkopplung jeweils mehr oder weniger kleiner Erregeramplituden möglich ist.

Dabei können die beiden Zwischenplattenhälften als spiegelbildlich symmetrische Ringe ausgebildet sein, in die in der Nähe des Außenumfangs der zur Trennfläche hin offene Überströmkanal mit halber Höhe und größerer als der endgültigen Breite sowie jeweils vom Boden des Kanals eine tangential zur anderen Stirnseite hin ausmündende Eintritts- bzw. Austrittsöffnung eingeformt sind und wobei sich radial innenliegend zum eingeformten Kanal ein ringförmiger Steg geringerer Höhe als der halben Kanalhöhe anschließt und die innenliegende, an die zentrale Öffnung anschließende Kante auf ihrer zur Trennebene gerichteten Seite angenähert entsprechend dem Verlauf der Kontur des Membranmittelteils gewölbt ist.

Dabei ist es auch möglich, daß der radial innenliegende Bereich der ringförmigen Zwischenplattenhälften den sich verdickenden Bereich der Gummimembran über den Umfang abschnittsweise überdeckt derart, daß in gleichmäßiger Teilung abwechselnd radial nach innen ragende Stege und freigeschnittene Bereiche vorgesehen sind.

Die Membran kann sich zur Mitte hin linsenförmig verdicken. Es ist aber auch möglich, daß die Membran einen sich doppelkonisch verdickenden Übergangsbereich und einen scheibenförmigen Mittelbereich aufweist.

Zur exakten Einstellung der wirksamen Länge des Überströmkanals ist es zweckmäßig, wenn die Membran einen seitlich abragenden, den Querschnitt des Kanals zwischen Auslaß- und Einlaßöffnung absperrenden Ansatz aufweist. Der Ansatz sollte in Umfangsrichtung unter einem Winkel von 30 - 60° geneigte, parallele Anströmflächen aufweisen, um damit eine wirbelfreie Einleitung und Ausleitung der den Kanal durchströmenden Flüssigkeit zu ermöglichen.

Darüber hinaus ist es noch möglich, die Eigenfrequenz der Membran durch Einstellung ihrer Materialhärte zu variieren.

Anhand einer schematischen Zeichnung sind Aufbau und Wirkungsweise von Ausführungsbeispielen nach der Erfindung näher erläutert. Dabei zeigen:

Fig. 1      einen     Vertikalschnitt     durch     ein Zweikammer-Motorlager,

Fig. 2 einen Schnitt durch die Zwischenplatte mit eingespannter Membran im vergrößerten Maßstab,

Fig. 3 einen Schnitt durch eine weitere Variante der Zwischenplatte mit Membran entsprechend der Schnittlinie III-III nach Fig. 4,

Fig. 4 eine Aufsicht auf die Zwischenplatte entsprechend Fig. 3,

Fig. 5 eine Aufsicht auf eine Membran mit seitlich angesetzem Verschlußteil und

Fig. 6 eine Seitenansicht der Membran entsprechend Blickrichtung A nach Fig. 5.

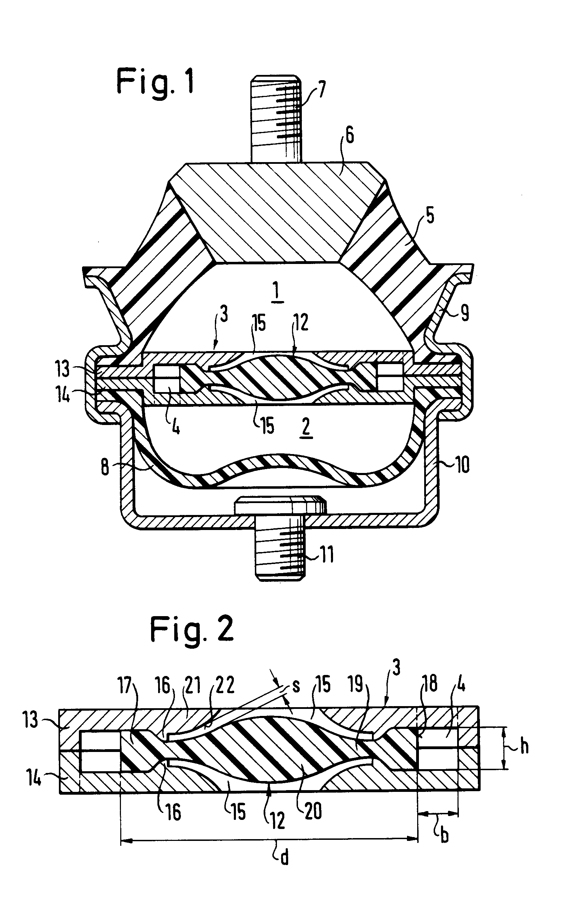

Wie aus Fig. 1 zu ersehen ist, weist das Zweikammer-Motorlager zunächst in herkömmlicher Weise eine obere motorseitige Kammer 1 und eine untere Ausgleichskammer 2 auf, die über einen, in einer Zwischenplatte 3 verlaufenden Kanal 4 miteinander in Verbindung stehen. Die obere Kammer 1 wird von einer starkwandigen hohlkegelförmigen Kammerwandung 5, der sogenannten Tragfeder, begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch volumennachgiebigerem Material als das der Kammerwandung 5 gebildet, da die Kammer 2 praktisch nur als Ausgleichskammer fungiert. Alle Lagerteile sind über einen umlaufenden Ringflansch 9 flüssigkeitsdicht miteinander verspannt, wobei der Ringflansch 9 gleichzeitig den unteren Gehäusedeckel 10 mit einem Anschlußbolzen 11 zur Festlegung des Lagers an der nicht näher dargestellten Fahrzeugkarosserie mit erfaßt.

Wie man deutlicher aus Fig. 2 ersieht, besteht die Zwischenplatte aus den beiden spiegelbildlich symmetrischen Ringen 13 und 14, die jeweils eine zentrale Öffnung 15 aufweisen und in die im äußeren Bereich der Überströmkanal 4 eingeschnitten ist, und zwar jeweils eine Hälfte in jeden der Ringe 13 und 14, von einer Breite, die zunächst größer ist als die endgültige Breite des Überströmkanals 4.

Zwischen entsprechenden ringförmigen Stegen 16 ist nunmehr die gummielastische Membran 12 eingespannt und zwar derart, daß die Membran 12 mit ihrem dickeren Randbereich 17 innerhalb des Überströmkanals 4 liegt und mit ihrem äußeren zylindrischen Umfang 18 die radial innenliegende Begrenzung des Übertrömkanals 4 bildet. Radial nach innen schließt sich an den Randbereich 17 über einen horizontalen Steg 19 geringer Dicke das sich stetig verdickende Mittelteil 20 der Membran 12 an, das bei dem dargestellten Ausführungsbeispiel linsenförmig aufgewölbt ist. Die dieses Mittelteil 20 überdeckenden, radial innenliegenden Randbereiche 21 der Zwischenplattenringe 13 und 14 weisen auf ihrer Unterseite eine Kontur 22 auf, die parallel zur Kontur des Membranmittelteils 20 verlaufen.

Mit einer derartigen Ausbildung und Anordnung von Zwischenplatte 3 und Membran 12 ergeben sich folgende Effekte:

Durch Vergrößerung oder Verkleinerung des Außendurchmessers d der Membran 12 kann die Breite b des Überströmkanals 4 und damit der Kanalquerschnitt b x h variiert werden. Durch die dichte Einspannung der Membran 12 an den Stegen 16 wird damit der Überströmkanal 4 auch flüssigkeitsdicht gegen die innere Öffnung 15 abgesperrt.

Durch den Verlauf der Kontur 22 parallel zur Oberfläche des Mittelteils 20 der Membran 12 ergibt sich ein Freiweg s für vertikale Auslenkungen der Membran, so daß damit die Frequenzbreite der zu entkoppelnden Erregeramplituden festgelegt wird, d.h. in Abhängigkeit der hydraulisch wirksamen Flächen des Tragkörpers 5 zur Entkopplungsmembran 12 können durch die Veränderung des Freiweges s mehr oder weniger kleine Erregeramplituden des Lagers hydraulisch entkoppelt werden.

Zusätzlich kann darüber hinaus durch entsprechende Einstellung der Materialhärte für die Membran die Eigenfrequenz des Entkopplungssystems variiert werden.

Damit ergibt sich also die Möglichkeit, allein durch Gestaltung und Materialwahl der Membran sowohl die Dämpfung als auch die akustische Entkopplung des Lagers zu beeinflussen.

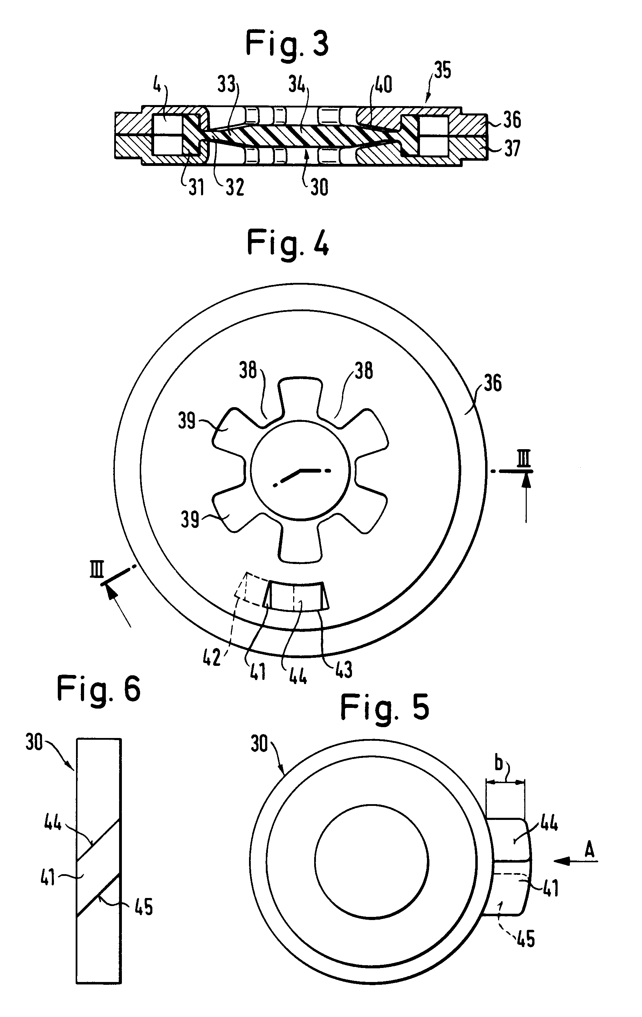

Eine weitere Möglichkeit für die Gestaltung von Zwischenplatte und Membran ist in den Fig. 3 und 4 gezeigt. Hiernach weist die Membran 30, ausgehend von den verdickten Randbereich 31, der in den Überströmkanal 4 ragt, anschließend an den horizontalen Steg 32 einen sich doppelkonisch verdickenden Übergangsbereich 33 und einen scheibenförmigen Mittelbereich 34 auf. Die aus den beiden Ringen 36 und 37 zusammengesetzte Zwischenplatte 35 überdeckt radial innenliegend den sich verdickenden Bereich 33 der Membran 30 abschnittsweise derart, daß in gleichmäßiger Teilung abwechselnd radial nach innen ragende Stege 38 und freigeschnittene Bereiche 39 vorgesehen sind. Zwischen den Stegen 38 und dem sich verdickenden Bereich 33 der Membran 30 sind in gleicher Weise Freiwege 40 zur Begrenzung der vertikalen Beweglichkeit der Membran 30 vorgesehen, wie das bereits anhand dem Ausführungsbeispiel nach Fig. 2 beschrieben worden ist.

Um darüber hinaus die wirksame Länge des Überströmkanals 4 exakt zu begrenzen, weist entsprechend Fig. 5 und 6 die Membran 30 einen seitlich radial abragenden Ansatz 41 von der Breite b des Kanals 4 auf. Dieser Ansatz 41 verschließt damit den Kanalabschnitt zwischen dem Auslaß 42 in der unteren Plattenhälfte 37 und dem Kanaleinlaß 43 in der oberen Plattenhälfte 36. Dabei weist der Ansatz 41 in Umfangsrichtung unter einem Winkel von etwa 30 - 60°, insbesondere 45°, geneigte parallele Anströmflächen 44 und 45 auf, um ein angenähert tangentiales wirbelfreies Ein- und Ausströmen der Lagerflüssigkeit zu gewährleisten.

Durch die entsprechende Breite des Ansatzes 41 in Umfangsrichtung kann damit auch der wirksame Umfangswinkel des Kanals 4 und die Lage von Einlaßöffnung 43 und Auslaßöffnung 42 zueinander festgelegt werden.

Selbstverständlich kann ein derartiger Ansatz auch bei einer Membran 12 entsprechend den Ausführungsbeispielen nach Fig. 1 und 2 vorgesehen sein.

Insgesamt ergibt sich also ein hydraulisch dämpfendes Zweikammer-Motorlager, bei dem durch einfache Variation von Geometrie und Material der Entkopplungsmembran sowohl die Dämpfung großer Amplituden als auch die Entkopplung akustischer Frequenzen jeweils für sich allein als auch im Zusammenwirken zueinander leicht eingestellt werden können.

## Patentansprüche

1. Hydraulisch dämpfendes Zweikammer-Motorlager mit einer Arbeitskammer (1) und einer Ausgleichskammer (2), wobei die Arbeitskammer (1) auf einer Seite von einer elastischen, starkwandigen und kegelförmigen Kammerwandung (5) und einer Motorlagerplatte (6) und die Ausgleichskammer (2) von einer tassenförmigen Gummiwandung (8) sowie einem als Gehäusedeckel (10) ausgebildeten Widerlager umgeben sind und beide, mit Flüssigkeit gefüllte Kammern (1, 2) über eine, in einer Zwischenplatte (3) zwischen den Kammern (1, 2) angeordneten Überströmkanal (4) hydraulisch miteinander in Verbindung stehen, und wobei in der zentral offenen, quer zur Lagerlängsachse in zwei symmetrische Hälften geteilten Zwi-schenplatte (3) eine elastische Gummimem-bran (12) eingespannt ist, die einen außen umlaufenden, über einen Steg (19) geringer Dik-ke, mit dem sich stetig verdickenden Membranmittelteil (20) verbundenen, zylindrischen Randbereich (17) aufweist, wobei die den sich verdickenden Membranmittelbereich (20; 34) überdeckenden innenliegenden Randbereiche (21; 38) der Zwischenplattenhälften (13, 14; 36, 37) auf ihrer Unterseite einen zur Membrankontur angenähert parallelen Verlauf aufweisen und zur Oberfläche der Membran (12; 30) einen Freiweg (s) vorgegebener Größe begrenzen dadurch gekennzeichnet, daß der zylindrische Randbereich (17; 31) der Membran (12; 30) bis in den in die Zwischenplattenhälften (13, 14; 36, 37) eingelassenen Überströmkanal (4) ragt und mit seinem Außenumfang (18) die radial innenliegende Begrenzung des Kanals (4) bildet.

2. Zweikammer-Motorlager nach Anspruch 1, dadurch gekennzeichnet, daß die beiden Zwischenplatten-Hälften als zueinander symmetrische Ringe (13, 14; 36, 27) ausgebildet sind, in die in der Nähe des Außenumfanges der zur Trennfläche hin offene Überströmkanal (4) mit halber Höhe und größerer als der endgültigen Breite sowie jeweils vom Boden des Kanals (4) tangential zur anderen Stirnseite hin ausmündende Eintritts- bzw. Austrittsöffnungen (43, 42) eingeformt sind, daß sich radial innenliegend zum eingeformten Kanal (4) ein ringförmiger Steg (16) geringerer Höhe als der halben Kanalhöhe anschließt und daß die innenliegende, an die zentrale Öffnung (15) anschließende Kante (21; 38) auf ihrer zur Tren-nebene gerichteten Seite angenähert entspre-chende der Kontur des Membranmittelteils (20; 34) gewölbt ist.

3. Zweikammer-Motorlager nach Anspruch 2, dadurch gekennzeichnet, daß der radial innenlie-gende Bereich der ringförmigen Zwischenplat-tenhälften (36, 37) den sich verdickenden Be-reich (33) der Gummimembran (30) über den Umfang abschnittsweise überdeckt derart, daß in gleichmäßiger Teilung abwechselnd radial nach innen ragende Stege (38) und freigeschnittene Bereiche (39) vorgesehen sind.

4. Zweikammer-Motorlager nach Anspruch 1 oder 2, dadurch gekennzeichnet, daß sich die Membran (12) zur Mitte hin linsenförmig verdickt.

5. Zweikammer-Motorlager nach Anspruch 1 bis 3, dadurch gekennzeichnet, daß die Membran (30) einen sich doppelkonisch verdickenden Übergangsbereich (33) und einen scheibenförmigen Mittelbereich (34) aufweist.

6. Zweikammer-Motorlager nach Anspruch 4 oder 5, dadurch gekennzeichnet, daß die Membran (30) einen seitlich abragenden, den Querschnitt des Kanals (4) zwischen Auslaß (42) und Einlaß (43) absperrenden Ansatz (41) aufweist.

7. Zweikammer-Motorlager nach Anspruch 6, dadurch gekennzeichnet, daß der Ansatz (41) in Umfangsrichtung unter einem Winkel von 30 - 60° geneigte, parallele Anströmflächen (44, 45) aufweist.

8. Zweikammer-Motorlager nach Anspruch 1, dadurch gekennzeichnet, daß die Eigenfrequenz der Membran (12; 30) durch ihre Materialhärte variierbar ist.

## Claims

1. Hydraulically damping twin-chamber engine bearing having a working chamber (1) and a compensation chamber (2), with the working chamber (1) being surrounded at one side by a resilient, thick, conical chamber wall (5) and an engine bearing plate (6) and the compensation chamber (2) being surrounded by a cup-shaped rubber wall (8) and an abutment in the form of a housing lid (10) and with both fluid-filled chambers (1, 2) being hydraulically connected to one another via an overflow channel (4) disposed in an intermediate plate (3) between the chambers (1, 2), and with there being clamped in the centrally open intermediate plate (3), which is divided at right angles to the bearing longitudinal axis into two symmetrical halves, a resilient rubber diaphragm (12) which has, extending around its outer periphery, a cylindrical edge region (17) connected by a land (19) of reduced thickness to the continuously thickening diaphragm central portion (20), with the inner-lying edge regions (21; 38) of the intermediate plate halves (13, 14; 36, 37) which overlap the thickening diaphragm central portion (20; 34) having on their underside a shape which is substantially parallel to the diaphragm contour and, in relation to the surface of the diaphragm (12; 30), delimiting a clearance (s) of a predetermined size, characterized in that the cylindrical edge region (17; 31) of the diaphragm (12; 30) projects as far as into the overflow channel (4) let into the intermediate plate halves (13, 14; 36, 37) and forms with its outer periphery (18) the radially inner-lying delimitation of the channel (4).

2. Twin-chamber engine bearing according to claim 1, characterized in that the two intermediate plate halves take the form of rings (13, 14; 36, 37) which are symmetrical to one another and into which are formed, in the vicinity of the outer periphery, the overflow channel (4) which is open towards the parting plane and is of half height and larger than its final width, as well as inlet and outlet openings (43, 42) which each open out from the base of the channel (4) tangentially towards the other end face, that there adjoins radially inwards in relation to the formed channel (4) an annular web (16) of a reduced height compared to the half channel height, and that the inner-lying edge (21; 38) adjoining the central opening (15), at its side directed towards the parting plane, is curved substantially according to the contour of the diaphragm central portion (20; 34).

3. Twin-chamber engine bearing according to claim 2, characterized in that the radially inner-lying region of the annular intermediate plate halves (36, 37) in sections overlap the periphery of the thickening region (33) of the rubber diaphragm (30) in such a way that uniformly spaced, alternating radially inward projecting webs (38) and cut-away regions (39) are provided.

4. Twin-chamber engine bearing according to claim 1 or 2, characterized in that the diaphragm (12) thickens towards the centre in the manner of a lens.

5. Twin-chamber engine bearing according to claims 1 to 3, characterized in that the diaphragm (30) has a biconically thickening transition region (33) and a disk-like central region (34).

6. Twin-chamber engine bearing according to claim 4 or 5, characterized in that the diaphragm (30) has a laterally projecting extension (41) which blocks the cross-section of the channel (4) between outlet (42) and inlet (43).

7. Twin-chamber engine bearing according to claim 6, characterized in that the extension (41) has parallel flow-past surfaces (44, 45) inclined in peripheral direction at an angle of 30 to 60°.

8. Twin-chamber engine bearing according to claim 1, characterized in that the natural frequency of the diaphragm (12; 30) is variable by means of its material hardness.

## Revendications

1. Support de moteur à deux chambres et à amortissement hydraulique, comprenant une chambre de travail (1) et une chambre de compensation (2), la chambre de travail (1) étant entourée d'un côté d'une paroi (5) élastique, épaisse et de forme conique et d'un plateau formant support (6) pour le moteur et la chambre de compensation (2) étant entourée d'une paroi (8) en caoutchouc en forme de tasse, ainsi que d'un appui constitué sous la forme d'un couvercle (10) et les deux chambres (1, 2) emplies de liquide communiquant hydrauliquement entre elles par un canal de passage (4) ménagé dans un plateau intermédiaire (3) entre les chambres (1, 2), une membrane (12) élastique en caoutchouc, qui présente une partie marginale (17) cylindrique, en faisant tout le tour à l'extérieur, et reliée, par une moulure (19) de moindre épaisseur, à la partie centrale (20) de la membrane de plus en plus épaisse, étant bloquée dans le plateau intermédiaire (3) ouvert en sa partie centrale et subdivisé en deux moitiés symétriques transversalement à l'axe longitudinal du support, les faces inférieures des parties marginales (21 ; 38) intérieures des moitiés du plateau intermédiaire (13, 14 ; 36, 37), qui recouvrent la partie centrale (20 ; 34) de la membrane de plus en plus épaisse, s'étendant à peu près parallèlement au contour de la membrane et délimitant vers la surface de la membrane (12 ; 30) un trajet libre (s) de dimension prescrite, caractérisé en ce que la partie marginale (17 ; 31) cylindrique de la membrane (12 ; 30) fait saillie jusque dans le canal de passage (4) enchâssé dans les moitiés du plateau intermédiaire (13, 14 ; 36, 37) et par sa périphérie extérieure (18) forme la limite intérieure radiale du canal (4).

2. Support de moteur à deux chambres suivant la revendication 1, caractérisé en ce que les deux moitiés du plateau intermédiaire sont constituées sous la forme d'anneaux (13, 14 ; 36, 27) qui sont symétriques l'un de l'autre et dans lesquels sont ménagés, à proximité de la périphérie extérieure, le canal de passage (4) ouvert vers la surface de joint, de hauteur égale à la moitié et plus grand que la largeur finale, ainsi que des orifices d'entrée et de sortie (43, 42) débouchant respectivement du fond du canal (4) tangentiellement vers l'autre côté frontal, en ce qu'il s'y raccorde une nervure (16) annulaire qui se trouve radialement vers l'intérieur par rapport au canal (4) formé et qui a une hauteur plus petite que la moitié de la hauteur du canal, et en ce que le bord (21 ; 38) intérieur et se raccordant à l'orifice (15) central est incurvé sur son côté dirigé vers le plan de joint, approximativement conformément au contour de la partie centrale (20 ; 34) de la membrane.

3. Support de moteur à deux chambres suivant la revendication 2, caractérisé en ce que la partie radialement intérieure des moitiés du plateau intermédiaire (36, 37) annulaires, recouvre la partie (33) épaissie de la membrane (30) en caoutchouc par sections sur la périphérie de manière à ménager, avec un pas uniforme et alternativement, des nervures (38), en saillie radialement vers l'intérieur et des parties (39) découpées.

4. Support de moteur à deux chambres suivant la revendication 1 ou 2, caractérisé en ce que la membrane (12) s'épaissit en forme de lentille vers le milieu.

5. Support de moteur à deux chambres suivant les revendications 1 à 3, caractérisé en ce que la membrane (30) comporte une partie de transition (33) s'épaississant en un double cône, et une partie centrale (34) en forme de disque.

6. Support de moteur à deux chambres suivant la revendication 4 ou 5, caractérisé en ce que la membrane (30) comporte un prolongement (41) faisant saillie latéralement et fermant la section transversale du canal (4) entre la sortie (42) et l'entrée (43).

7. Support de moteur à deux chambres suivant la revendication 6, caractérisé en ce que le prolongement (41) comporte, dans la direction périphérique, des surfaces (44, 45) parallèles d'affluence inclinées de 30 à 60°.

8. Support de moteur à deux chambres suivant la revendication 1, caractérisé en ce que la fréquence propre de la membrane (12 ; 30) peut être modifiée par la dureté de la matière qui la constitue.

## Fig. 1

## Fig. 2

# Fig. 3

# Fig. 4

# Fig. 6

# Fig. 5